Europäisches Patentamt

European Patent Office

Office européen des brevets

(19)

(11) Publication number: **0 243 567 B1**

# EUROPEAN PATENT SPECIFICATION

(12)

(45) Date of publication of patent specification: **18.03.92**  (51) Int. Cl.⁵: **A23B 7/02**, A23B 7/148, A23L 1/223

(21) Application number: **86830135.9**

(22) Date of filing: **22.05.86**

The file contains technical information submitted after the application was filed and not included in this specification

(54) Process for preservation of vegetable products.

(30) Priority: **30.04.86 IT 121686**

(43) Date of publication of application:
**04.11.87 Bulletin 87/45**

(45) Publication of the grant of the patent:
**18.03.92 Bulletin 92/12**

(84) Designated Contracting States:
**AT BE CH DE FR GB LI NL SE**

(56) References cited:
EP-A- 0 087 717          FR-A- 372 370
FR-A- 770 967           FR-A- 872 489
FR-A- 932 072           FR-A- 1 435 060
FR-A- 2 263 705         OA-A- 5 100
US-A- 2 376 049         US-A- 4 109 026
US-A- 4 202 912

(73) Proprietor: **ABOCA S.r.l.**
**Frazione Aboca**
**I-52037 Sansepolcro (Arezzo)(IT)**

(72) Inventor: **Mercati, Valentino**
**Francesca, n. 32**
**I-06012 Città di Castello (Perugia)(IT)**

(74) Representative: **Berneschi, Ciro**
**Ufficio Brevetti Via Paolo Uccello, 6**
**I-52100 Arezzo(IT)**

## Description

The present invention relates to a process for preservation of vegetable products, applied to the field of herbalism, pharmacy and cosmetics, without the use of chemical products, in which the herbs are treated until they are packed.

Now herbs and vegetable products are used in herbolisteries, pharmacies and cosmetics, hereafter called herbs, pass from the production to the point of sale or of use by undergoing an desiccation stage immediately after the harvest.

The dried herbs are put on the market in jute bales which consent them a good air circulation so as to prevent the high humidity (15 - 30%) held in the herbs from causing their fermentation.

Furthermore the preservation is obtained through repeated chemical disinfestation stages using ethylene oxide, methyl bromide, oil ether and other chemical products having the function of killing the insects which are carriers of diseases and pathogenous germs.

These chemical products are used to kill bacteria and the preserve the substances contained in the herbs and prevent fermentation or other chemical processes from causing the deterioration of the herbs which could make them ineffective.

The disinfestation is done in warehouses and/or in the holds of the ships during their shipment desultorily using suitable vacuum machines to reduce the toxic residues in the room where the operators act.

The herbs absorb the chemical substances and, specially when they are submitted to repeated disinfestation, the herbs can produce residues superior to those allowed by law becoming then harmful to whoever uses them.

Another process which falls within the field of herb treatments for herbalist and pharmaceutical use is the preparation of sachets of "kikelibah" and similar herbs (Pat. OA - A05100 in the name of B Abdoulaye), in which the leaves are cleaned, dampened, finely chopped with special machines, then desiccated by a roasting process disinfested with methyl formide and ethyl oxide gas and finally packed in pereable sachets similar to those used for tea-bags. Using this method the leaves must be finely sorted, then disinfested using chemical gases, and since they are not packed in air-tight containers, the packed product is inclined to absorb humidity and bacteria from the air; the end product is also very delicate and needs to be stored in a dry, clean place if it is to be well-preserved.

Today the treatment and preservation system which consents the herbs to reach the utilization, involves the following disadvantages:

a) the putting on the market of objects which cannot comply with the law as regards the chemical and toxic residues, especially for the herbs which have undergone repeated disinfestation;

b) the loss of a portion of the product which deteriorates when it comes into contact with the air, although chemical substances are used. But, because of their volatility, after a time the chemical substances lose their effectiveness;

c) the impoverishment of the product which in the course of time loses its characteristics and then its active special principles when it comes into contact with air and light;

d) the possible loss of the product which, because of its contact with the air, is subject to accidental causes of deterioration such as rain or flood, unwanted pollution, fires and other unexpected causes.

The inconvenience today present in the preservation and commercialization of herbs for herbalist, pharmaceutic, and cosmetic purposes, are eliminated with the process object of the present patent with which the same herbs are treated and preserved.

Substancially the patent consists in a succession of stages with which the chemically untreated herbs coming from harvest-fields or, from producers, are transformed in a selected and packed product so that it can be carried and stored for a relatively long time without loosing its active principles and above all without having undergone any chemical treatment which could make it harmful to the health of whoever uses it.

The herbs dried in entry of the process in object, normally hold an humidity of 3 - 8% which make them stiff and fragile.

Therefore the herbs undergo a first stage during which they are humidified to allow them to be mixed and in successive operations to undergo rough mechanical treatment without breaking up.

This first stage, normally realized with steam or atomized water, will fail when the herbs in entry to be treated will have sufficient humidity to keep them integral in the successive stages.

The humidified herbs are selected with removal of their leaves or barren parts and then if necessary mixed with other different kinds of herbs to obtain the mixture desired in the final product.

The herbs so obtained undergo cutting and/or chopping with cutters or shears and then they are sieved in order to sort and grade the herbs equally and to conform to the required size of the final product.

The product obtained into biggish fragments and with a humidity of 30 - 35%, which facilitates the selection mixing, cutting and grading stages, is dried in fixed drying stores, in the shape of a tunnel or, however, with a recognised drying or dehydration system.

During this process the humidity reaches the 3 - 10% depending on of the fragility of the product and of the integrity of the single small pieces which will be preserved.

This drying stage is carried out by heating at temperatures, pressures, velocities adjustable drying fluid (hot, dry air) and for a length time depending on the product to be treated.

Acting on the temperature of the hot, dry air and on the duration of this phase, the percentage of the killed bacteria is regulated in relation to the treated product.

The herbs so treated are packed in air-tight containers vacuum packs to prevent the herbs from coming in contact with the external air which would unbalance the humidity level and invalidate the previous sterilisation.

These containers will be not transparent to prevent the product from being damaged by the light.

The vacuum-packing stage or the packing with airtight containers favours the stabilization of the herbs in the time, and in particular it consents the preservation of the active principles held in the same.

The process for the preservation of herbs therefore involves an initial stage in which the dried herbs are humidified till the value of 30 - 35%, on average, which allows the herbs to be handled without becoming fragile and thus without breaking and/or pulverizing.

There follows a stage where the herbs are selected with removal of the inactive and inefficacious parts and if necessary are mixed with other kinds of herbs.

Then the herbs undergo a chopping process until they are reduced to the required size which will be determined by the various sieves, and is followed by a phase in which the chopped herbs are dried in the desiccation chambers once more so that they reach the desired residual humidity oscillating between 3 - 10%, and at the same time are sterilised.

In this stage the duration, from a minimum of one or two hours to a maximum of 50 to 60 hours, and the temperature, which can reach 80°C in case of bran, caused bacteria to be killed, thus the length and temperature of this process is regulated according to the desired effect.

Finally, this is followed by the vacuum-envelopment and the packing in airtight containers.

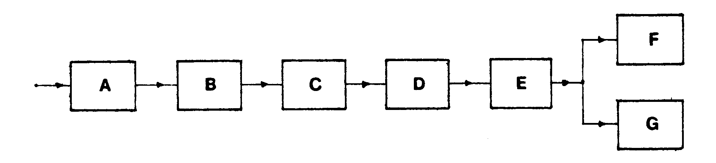

## Claims

1. Process for the preservation of vegetable products, applied to the fields of herbalism, pharmacy and cosmetics, without using chemical products, in which herbs are treated until they are packed, and which includes humidification, selection, if necessary, mixing, and cutting with cutting and shredding machines, and consists of the following phases:
   - sorting of the chopped herbs using sieves;
   - sterilisation of the herbs in desiccation chambers using hot, dry air flows;
   - the packing process using air-tight containers to prevent air from entering the process.

2. Process for the preservation of vegetable products, applied to the field of herbalism, pharmacy and cosmetics, in accordance with claim 1), characterized by the fact that chemically untreated herbs which come directly from the fields or producers are used in entry.

3. Process for the preservation of vegetable products, used in the fields of herbalism, pharmacy and cosmetics, in accordance with claim 1), characterized by a stage where the humidified herbs are selected and if necessary mixed with other kinds of herbs.

4. Process in accordance with claim 1), characterized by a stage where the herbs are cut or broken into tiny pieces with cutting or shredding machines and separated with sieves into grated groups of equal sizes.

5. Process for the preservation of vegetable products, in accordance with claim 1), characterized by a stage where the chopped herbs undergo desiccation in drying chambers so much that the residual humidity reaches values of between 3 - 10 %.

6. Process in accordance with claim 1), characterized by a stage in which the herbs remains in hot air chambers at a adjustable temperature and for a period of time ranging from 1 to 60 hours sufficient to cause the death of the bacteria.

7. Process in accordance with claim 1), characterized by a packing stage where the dried and sterilized product is packed in airtight containers.

## Revendications

1. Procédé pour la conservation de produits végétaux appliqué aux domaines de l'herboristerie, de la pharmacie et des cosmétiques, ne mettant pas en oeuvre de produits chimiques, dans lequel les herbes sont traitées avant conditionnement et qui comprend l'humidification, la sélection; si nécessaire le mélange, et la coupe avec des machines à hacher et à déchiqueter, et caractérisé en ce qu'il comprend les phases suivantes :

- tri des herbes hachées avec des tamis;
- stérilisation des herbes dans des chambres de dessication avec des courants d'air chaud et sec;
- conditionnement dans des récipients étanches à l'air pour empêcher l'air de pénétrer dans le produit.

2. Procédé pour la conservation de produits végétaux appliqué aux domaines de l'herboristerie, de la pharmacie et des cosmétiques suivant la revendication 1, caractérisé en ce que des herbes non traitées chimiquement provenant directement des champs ou des producteurs, sont utilisées comme matières de départ.

3. Procédé pour la conservation de produits végétaux appliqué aux domaines de l'herboristerie, de la pharmacie et des cosmétiques suivant la revendication 1, caractérisé en ce qu'il comprend une étape dans laquelle les herbes humidifiées sont sélectionnées et si nécessaire, mélangées avec d'autres sortes d'herbes.

4. Procédé suivant la revendication 1, caractérisé en ce qu'il comprend une étape dans laquelle les herbes sont coupées ou cassées en petits morceaux avec des machines à hacher ou à déchiqueter, puis séparées avec des tamis en groupes classés de mêmes dimensions.

5. Procédé pour la conservation de produits végétaux suivant la revendication 1, caractérisé en ce qu'il comprend une étape dans laquelle les herbes hachées subissent une dessication dans des chambres de séchage jusquà obtention d'une humidité résiduelle de l'ordre de 3 à 10%.

6. Procédé suivant la revendication 1, caractérisé en ce qu'il comprend une étape dans laquelle les herbes restent dans des chambres traversées par de l'air chaud à une température ajustable et pendant une période de temps comprise entre 1 et 60 heures suffisante pour provoquer la mort des bactéries.

7. Procédé suivant la revendication 1, caractérisé en ce qu'il comprend une étape de conditionnement dans laquelle le produit séché et stérilisé est emballé dans des répcipients étanches à l'air.

**Patentansprüche**

1. Verfahren zur Konservierung von pflanzlichen Produkten auf dem Gebiet des Heilkräuterhandels, der Pharmazie und der Kosmetik, ohne Verwendung chemischer Produkte, wobei Kräuter vor dem Verpacken behandelt werden, und welches eine Befeuchtung, eine Selektion, gegebenenfalls ein Mischen und Schneiden mit Schneid- und Schrotmaschinen umfaßt und aus folgenden Schritten besteht:
- dem Sortieren der zerhackten Kräuter unter Verwendung von Sieben;
- dem Sterilisieren der Kräuter in Trockenkammern unter Verwendung eines heißen, trockenen Luftstroms; und
- dem Verpackungsvorgang unter Verwendung luftdichter Behälter zum Ausschluß von Luft während des Verfahrens.

2. Verfahren zur Konservierung von pflanzlichen Produkten auf dem Gebiet des Heilkräuterhandels,der Pharmazie und der Kosmetik gemäß Anspruch 1,
**dadurch gekennzeichnet,** daß chemisch unbehandelte Kräuter, frisch vom Feld oder von den Erzeugern, zum Beginn verwendet werden.

3. Verfahren zur Konservierung von pflanzlichen Produkten auf dem Gebiet des Heilkräuterhandels, der Pharmazie und der Kosmetik nach Anspruch 1, gekennzeichnet durch einen Schritt, bei dem die angefeuchteten Kräuter selektiert und gegebenenfalls mit anderen Kräuterarten gemischt werden.

4. Verfahren nach Anspruch 1, gekennzeichnet durch einen Schritt, bei dem die Kräuter mit Schneid- oder Schrotmaschinen in kleine Stükke geschnitten oder gebrochen werden und mit Hilfe von Sieben in klassifizierte Gruppen gleicher Größe getrennt werden.

5. Verfahren zur Konservierung von pflanzlichen Produkten nach Anspruch 1, gekennzeichnet durch einen Schritt, bei dem die zerhackten Kräuter in Trockenkammern einer Trocknung unterzogen werden, bis die Restfeuchte Werte von 3 bis 10 % erreicht.

6. Verfahren nach Anspruch 1, gekennzeichnet durch einen Schritt, bei dem die Kräuter in Heißluftkammern bei einer einstellbaren Temperatur und über einen Zeitraum von 1 bis 60 Stunden verbleiben, welcher ausreicht, um Bakterien abzutöten.

**7.** Verfahren nach Anspruch 1, gekennzeichnet durch einen Verpackungsschritt, bei dem das getrocknete und sterilisierte Produkt in luftdichten Behältern abgepackt wird.